# EUROPEAN PATENT APPLICATION

(11) **EP 4 682 653 A1**
(43) Date of publication of application: **21.01.2026**
(21) Application number: 24770661.7
(22) Date of filing: 06.03.2024
(51) Int. Cl.: G05B 19/05, G05B 19/045

(54) **SUPPORT DEVICE, CONTROL METHOD, AND SUPPORT PROGRAM**

(30) Priority: 14.03.2023 JP 2023039463
(71) Applicant: OMRON Corporation, Kyoto 600-8530 (JP)
(72) Inventor: OGAWA, Yoshiaki, Kyoto-shi, Kyoto 600-8530 (JP)
(74) Representative: Mewburn Ellis LLP
(86) International application number: PCT/JP2024/008444
(87) International publication number: WO 2024/190551

(57) **Abstract**

A support device (100) provides a user interface for allowing a user to conduct a publication setting of a variable to an external device (300), the variable being generated during execution of a user program (230), and generates publication setting information (260) based on the publication setting conducted by the user using the user interface. A control device (200) manages publication of a variable to the external device (300) based on the publication setting information (260), the variable being generated during execution of the user program (230). The publication setting information (260) includes at least one of: information for setting whether or not to permit the external device to read at least one variable according to at least one role; and information for setting whether or not to permit the external device to execute the at least one variable according to the at least one role. The user interface is configured to allow the user to specify one of the at least one role to conduct the publication setting.

## Description

### TECHNICAL FIELD

The present invention relates to a support device, a control method, and a support program, and more particularly to a support device that supports a control device configured to control a control target according to a user program, a control method for the support device, and a support program for supporting the control device.

### BACKGROUND ART

At various production sites, a factory automation (FA) system for automating a production process has been in widespread use. The FA system is constituted of various types of industrial drive equipment. Such industrial drive equipment includes, for example, a movable table for moving a workpiece, a conveyor for conveying a workpiece, an arm robot for moving a workpiece to a predetermined target location, and the like. Each drive equipment mentioned above is controlled by an industrial control device such as a programmable logic controller (PLC) or a robot controller.

The control device controls each type of drive equipment as a control target according to a program designed in advance by a designer or the like (the program will also be hereinafter referred to as a "user program"). By using a support device that supports the control device, a designer can develop an arbitrary user program adapted to each drive equipment as a control target.

As the control device described above, a control device supporting an open platform communications unified architecture (OPC UA) has become prevalent. The OPC UA is a communication standard specification defined for implementing exchange of data between a plurality of devices without depending on vendors, the type of an operating system (OS), or the like. By using the control device supporting the OPC UA, an external device can easily access data managed by the control device.

In this case, a user of the control device needs to conduct a setting in advance for pieces of data managed by the control device, for example, a setting as to which data is to be published, a setting as to which data is to be read-only and which data is to be executable, and the like (the setting will also be hereinafter referred to as a "publication setting").

In this respect, Japanese Patent Laying-Open No. 2019-159632 (PTL 1) discloses a development support device configured to conduct a publication setting for a variable included in a user program for each predetermined namespace.

### CITATION LIST

### PATENT LITERATURE

PTL 1: Japanese Patent Laying-Open No. 2019-159632

### SUMMARY OF INVENTION

### TECHNICAL PROBLEM

According to the development support device disclosed in PTL 1, a user can conduct a publication setting for the variable included in the user program for each predetermined namespace, in which case, however, every user is allowed to access and execute the published variable. Thus, there is still room for improvement in order to enhance security.

One object of the present disclosure is to solve the above-described problems, and another object thereof is to provide a technique that enables enhancement of security related to publication of a variable to an external device.

### SOLUTION TO PROBLEM

According to one example of the present disclosure, a support device that supports a control device configured to control a control target according to a user program is provided. The support device includes: a provision unit that provides a user interface for allowing a user to conduct a publication setting of at least one variable to an external device, the at least one variable being generated during execution of the user program; and a publication setting unit that generates publication setting information based on the publication setting conducted by the user using the user interface. The control device is configured to manage publication of the at least one variable to the external device based on the publication setting information, the at least one variable being generated during execution of the user program. The publication setting information includes at least one of: information for setting whether or not to permit the external device to read the at least one variable according to at least one role; and information for setting whether or not to permit the external device to execute the at least one variable according to the at least one role. The user interface is configured to allow the user to specify one of the at least one role to conduct the publication setting.

According to the present disclosure, the user can specify one of the at least one role to set at least one of: whether or not to permit the external device to read the at least one variable; and whether or not to permit the external device to execute the at least one variable, so that the security related to publication of the variable to the external device can be enhanced.

In the above disclosure, the at least one role includes: a first role; and a second role. The at least one variable of the second role is larger in number than the at least one variable of the first role, the at least one variable being permitted to be published to the external device than the first role.

According to the present disclosure, the user can specify one of the first role and the second role that is larger in number of the at least one variable to be published to the external device than the first role, to set at least one of: whether or not to permit the external device to read the at least one variable; and whether or not to permit the external device to execute the at least one variable, so that the security related to publication of the variable to the external device can be enhanced.

In the above disclosure, the at least one variable that is published to the external device when the second role is specified includes all of the at least one variable that is permitted to be published to the external device when the first role is specified, and the at least one variable that is permitted to be published to the external device when the first role is specified does not include all of the at least one variable that is permitted to be published to the external device when the second role is specified.

According to the present disclosure, the user can specify the first role to allow all of the at least one variable to be published to the external device and can specify the second role not to allow all of the at least one variable to be published to the external device.

In the above disclosure, the user program includes first identification information for identifying an instance generated during execution of a function block included in the user program. The function block has second identification information that is unique. The at least one variable used during the execution is determined in advance in the function block. The user interface is configured to allow the user to specify at least one of the first identification information and the second identification information to conduct the publication setting.

According to the present disclosure, the user can efficiently conduct the publication setting of the variable to the external device by specifying at least one of: the publication setting of the variable that is conducted using the first identification information for identifying the instance generated during execution of the function block; and the publication setting of the variable that is conducted using the second identification information that is unique to the function block.

In the above disclosure, the user interface is configured to allow the user to conduct the publication setting of each of the at least one variable stored in the instance that corresponds to the first identification information specified by the user.

According to the present disclosure, the user can conduct the publication setting also for each of the at least one variable stored in the instance corresponding to the specified first identification information, and therefore, can more specifically and efficiently conduct the publication setting of the variable to the external device.

In the above disclosure, the publication setting information includes information for which the publication setting conducted using the first identification information is prioritized over the publication setting conducted using the second identification information.

According to the present disclosure, since the user can prioritize the publication setting of the variable that is conducted using the first identification information for identifying the instance over the publication setting of the variable that is conducted using the second identification information unique to the function block, it is possible to avoid inconsistency between the publication setting of the variable in the instance and the publication setting of the variable in the function block.

In the above disclosure, the publication setting information includes information for which the publication setting conducted using the second identification information is prioritized over the publication setting conducted using the first identification information.

According to the present disclosure, since the user can prioritize the publication setting of the variable that is conducted using the second identification information unique to the function block over the publication setting of the variable that is conducted using the first identification information for identifying the instance, it is possible to avoid inconsistency between the publication setting of the variable in the instance and the publication setting of the variable in the function block.

In the above disclosure, the user interface is configured to allow the user to select which one of the publication setting conducted using the first identification information and the publication setting conducted using the second identification information is prioritized.

According to the present disclosure, since the user can select which one of the publication settings is prioritized among the publication setting of the variable that is conducted using the first identification information for identifying the instance and the publication setting of the variable that is conducted using the second identification information unique to the function block, it is possible to avoid, in consideration of the priority, inconsistency between the publication setting of the variable in the instance and the publication setting of the variable in the function block.

According to another example of the present disclosure, a control method for a support device that supports a control device configured to control a control target according to a user program is provided. The control method includes: providing a user interface for allowing a user to conduct a publication setting of at least one variable to an external device, the at least one variable being generated during execution of the user program; and generating publication setting information based on the publication setting conducted by the user using the user interface. The control device is configured to manage publication of the at least one variable to the external device based on the publication setting information, the at least one variable being generated during execution of the user program. The publication setting information includes at least one of: information for setting whether or not to permit the external device to read the at least one variable according to at least one role; and information for setting whether or not to permit the external device to execute the at least one variable according to the at least one role. The user interface is configured to allow the user to specify one of the at least one role to conduct the publication setting.

According to the present disclosure, the user can specify one of the at least one role to set at least one of: whether or not to permit the external device to read the at least one variable; and whether or not to permit the external device to execute the at least one variable, so that the security related to publication of the variable to the external device can be enhanced.

According to another example of the present disclosure, a support program for supporting a control device configured to control a control target according to a user program is provided. The support program causes a computer to perform: providing a user interface for allowing a user to conduct a publication setting of at least one variable to an external device, the at least one variable being generated during execution of the user program; and generating publication setting information based on the publication setting conducted by the user using the user interface. The control device is configured to manage publication of the at least one variable to the external device based on the publication setting information, the at least one variable being generated during execution of the user program. The publication setting information includes at least one of: information for setting whether or not to permit the external device to read the at least one variable according to at least one role; and information for setting whether or not to permit the external device to execute the at least one variable according to the at least one role. The user interface is configured to allow the user to specify one of the at least one role to conduct the publication setting.

According to the present disclosure, the user can specify one of the at least one role to set at least one of: whether or not to permit the external device to read the at least one variable; and whether or not to permit the external device to execute the at least one variable, so that the security related to publication of the variable to the external device can be enhanced.

### BRIEF DESCRIPTION OF DRAWINGS

Fig. 1 is a diagram showing an example of a control system to which a support device according to an embodiment is applied.
Fig. 2 is a diagram showing an example of instantiation of a function block (FB definition).
Fig. 3 is a diagram showing an example of a hardware configuration of a control device.
Fig. 4 is a diagram showing an example of a hardware configuration of the support device.
Fig. 5 is a diagram showing an example of a hardware configuration of an external device.
Fig. 6 is a sequence diagram showing a flow of a process of each of the support device, the control device, drive equipment, and the external device.
Fig. 7 is a diagram showing an example of a development screen that is a user interface provided by the support device.
Fig. 8 is a diagram showing an example of a user setting screen that is a user interface provided by the support device.
Fig. 9 is a diagram showing an example of the user setting screen that is the user interface provided by the support device.
Fig. 10 is a diagram showing an example of a publication setting screen that is a user interface provided by the support device.
Fig. 11 is a diagram showing an example of the publication setting screen that is the user interface provided by the support device.
Fig. 12 is a diagram showing an example of access authority for each role.
Fig. 13 is a diagram showing an example of access authority for each role.
Fig. 14 is a diagram showing an example of the publication setting screen that is the user interface provided by the support device.
Fig. 15 is a diagram showing a modification of the publication setting screen that is the user interface provided by the support device.
Fig. 16 is a diagram showing a modification of the publication setting screen that is the user interface provided by the support device.
Fig. 17 is a diagram showing a modification of the publication setting screen that is the user interface provided by the support device.
Fig. 18 is a diagram showing a modification of the publication setting screen that is the user interface provided by the support device.
Fig. 19 is a diagram showing a modification of the publication setting screen that is the user interface provided by the support device.

### DESCRIPTION OF EMBODIMENTS

Embodiments of the present disclosure will be described in detail with reference to the accompanying drawings. The same or corresponding portions in the drawings are denoted by the same reference characters, and the description thereof will not be repeated.

### <A. Application Example>

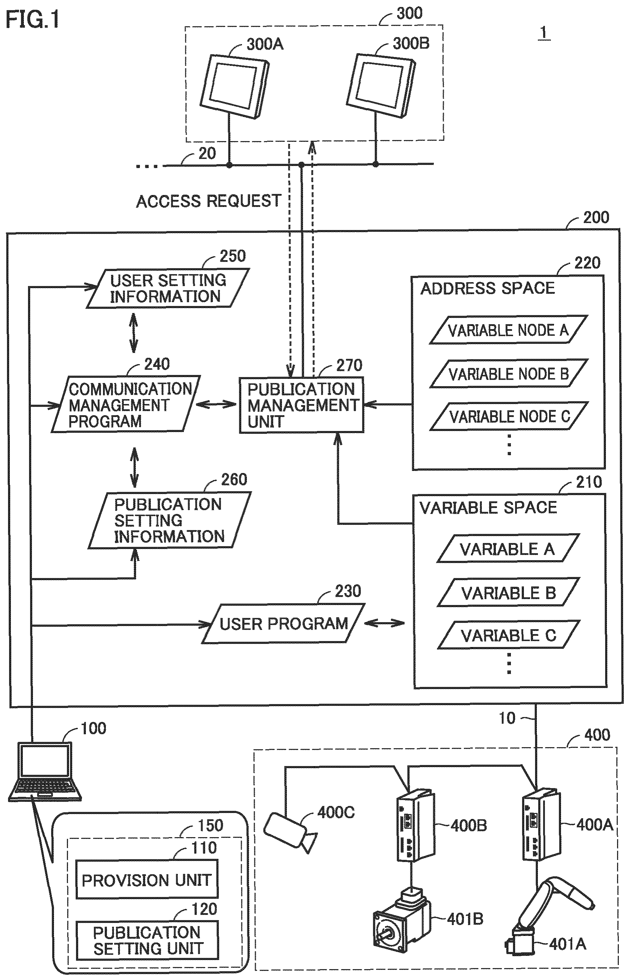

An example of a scene to which a support device 100 of the present disclosure is applied will be hereinafter described with reference to Fig. 1. Fig. 1 is a diagram showing an example of a control system 1 to which support device 100 according to an embodiment is applied. Control system 1 is an FA system that automates a production process. As shown in Fig. 1, control system 1 includes a control device 200, drive equipment 400 that is a target controlled by control device 200, an external device 300 that exchanges data with control device 200, and support device 100 that supports control device 200.

Control device 200 is a device such as a PLC that executes a user program 230 for controlling a control target. Control device 200 is communicably connected to drive equipment 400 via a control-system network 10. As control-system network 10, it is preferable to adopt a field network that performs constant periodic communication in which the arrival time of data is ensured. As a field network that performs such constant periodic communication, EtherCAT (registered trademark), EtherNet/IP (registered trademark), CompoNet (registered trademark), and the like are known. Control device 200 may be communicably connected to drive equipment 400 via a remote input/output (I/O) device or an I/O unit as control-system network 10.

Control device 200 is communicably connected to external device 300 via an information-system network 20. Information-system network 20 is preferably, for example, a network conforming to a communication standard allowing exchange of data without depending on vendors, the type of an operating system (OS), or the like. As such a communication standard, for example, an OPC UA and the like are known. The communication standard adopted in information-system network 20 is not limited to the OPC UA. For example, information-system network 20 may be a network conforming to a communication standard specific to a particular vendor or OS.

In the case where information-system network 20 is a network conforming to the OPC UA, control device 200 functions as an OPC UA server, and external device 300 functions as an OPC UA client. In control system 1 supporting such an OPC UA, external device 300 that is an OPC UA client can easily access the data managed by control device 200 that is an OPC UA server. Hereinafter, the service provided by control system 1 as described above will also be referred to as a "network publication service".

Control device 200 is communicably connected to support device 100 through a universal serial bus (USB) connection or the like.

Drive equipment 400 includes various types of industrial equipment for automating a production process. Drive equipment 400 includes, for example, a robot controller 400A that controls a robot 401A, a servo driver 400B that controls a servo motor 401B, and a sensor 400C that collects various pieces of data. Each drive equipment 400 mentioned above is controlled by control device 200 via control-system network 10.

External device 300 acquires data managed by control device 200 via information-system network 20. External device 300 includes, for example, a human machine interface (HMI), a notebook or desktop personal computer (PC), a smartphone, a tablet terminal, or another information processing device having a display function. Fig. 1 shows an HMI 300A and an HMI 300B as external device 300. Note that external device 300 is not limited to an information processing device having a display function such as an HMI, but may be another control device (a PLC or the like) different from control device 200. For example, control system 1 may be configured such that data managed by each of the plurality of control devices 200 is exchanged among the plurality of control devices 200 through communicable connection of the plurality of control devices 200.

Support device 100 is, for example, a notebook or desktop PC, a smartphone, a tablet terminal, or another information processing device capable of developing user program 230 for control device 200. A development tool 150 may be installed in support device 100. Development tool 150, which is an application for supporting control device 200, is implemented by executing a support program 130 described later. Development tool 150 provides a designer with a user interface for developing user program 230. An example of development tool 150 is "Sysmac Studio" manufactured by OMRON Corporation. The designer can develop user program 230 using the user interface provided by development tool 150 and install the developed user program 230 in control device 200. For example, user program 230 is transmitted to control device 200 as a file in an executable form that is compiled by support device 100.

In control system 1 configured as described above, the user needs to conduct a setting in advance for security whether or not to publish the data managed by control device 200 to external device 300 (publication setting). The "user" includes a designer of user program 230, a user of control system 1, an administrator of control system 1, or the like. "Publication" includes at least one of reading of a variable and writing onto a variable. The data managed by control device 200 includes at least one variable stored in an instance generated when user program 230 is executed.

The "variable" is a concept representing an arbitrary numerical value or character string that is used by control device 200 during execution of user program 230. The term "variable" is used as a logarithm of a constant whose value does not change at all times. Further, the "variable" is not limited to the input/output data exchanged with the outside or the temporary data itself generated during internal processing, but can also be said to be a container (a memory area) in which the input/output data, the temporary data or the like is stored.

User program 230 may be described in any programming language. For example, user program 230 is defined by using at least one of a ladder diagram (LD), an instruction list (IL), a structured text (ST), and a sequential function chart (SFC). User program 230 may be defined in a generic programming language such as JavaScript (registered trademark) or C language.

User program 230 according to the embodiment is created according to "IEC61131-3" that is a standard specification regarding programming of a PLC as an example of control device 200, and is configured in a program configuration unit called a program organization unit (POU). User program 230 includes a function block (hereinafter also referred to as "FB") as a constituent element of the POU.

The "function block" is implemented as a component of a function repeatedly used in user program 230. More specifically, the function block is a POU, such as a timer or a counter, which is used when creating a component (for example, a type) that may be different in output variable with respect to the same input variable in accordance with the state of drive equipment 400 as a control target. In the function block, at least one variable used during execution of the function block is determined in advance. The "at least one variable" includes, for example, an input variable, an output variable, an input/output variable, an internal variable, and the like. The input variable is a variable used in the function block as input data to be input to the function block. The output variable is a variable used in the function block as output data to be output from the function block. The input/output variable is a variable used in the function block as input/output data to/from the function block. The internal variable is a variable for temporary data storage in the function block.

The function block prepared in advance as a type is also referred to as an FB definition. At the time point when the function block (FB definition) is arranged in user program 230, each function block (FB definition) is individually treated on user program 230 as an instance and thus becomes actually operable on user program 230. In general, the term "function block" includes both: a function block (FB definition) meaning a type; and a function block incorporated in user program 230 and instantiated therein. In the embodiment, however, the "function block" is regarded as a term referring to a function block (FB definition) meaning a type.

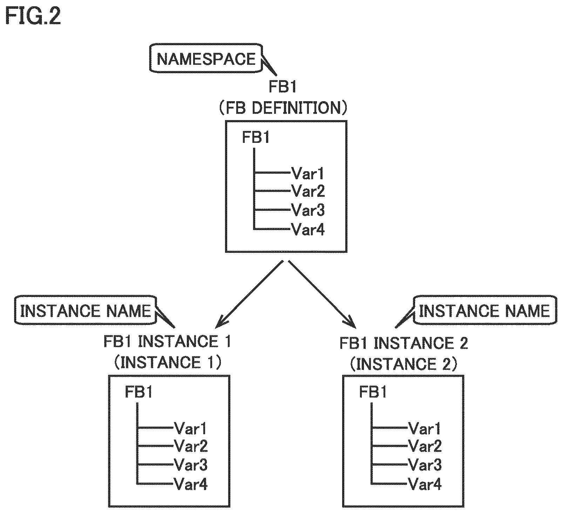

The instantiation of a function block (FB definition) will be hereinafter described with reference to Fig. 2. Fig. 2 is a diagram showing an example of instantiation of the function block (FB definition). As shown in Fig. 2, in FB1 (FB definition), at least one variable (Var1, Var2, ...) is determined in advance. Such FB1 (FB definition) is arranged in user program 230 and thereby treated individually on user program 230 as FB 1 corresponding to an instance 1 and FB 1 corresponding to an instance 2.

The "instance" is that a function block (FB definition) is arranged on user program 230. Each instance defined on user program 230 uses an individual memory area. The user generates a plurality of instances based on one function block (FB definition) on user program 230, to allow control device 200 to process different pieces of input/output data having the same function according to user program 230.

As shown in Fig. 2, the function block (FB definition) has a unique "namespace" as identification information. For example, the function block (FB definition) is associated with "FB1" as a namespace. Further, the instance has a unique "instance name" as identification information. For example, FB1 corresponding to instance 1 is associated with "FB1 instance 1" as an instance name, and FB1 corresponding to instance 2 is associated with "FB1 instance 2" as an instance name.

Returning to Fig. 1, control device 200 includes a variable space 210, an address space 220, a user program 230, a communication management program 240, user setting information 250, and publication setting information 260. These pieces of information are stored in a storage device 202 of control device 200, which will be described later.

Variable space 210 is a memory area including at least one variable generated when user program 230 is executed. In the example in Fig. 1, variable space 210 includes a plurality of variables such as a variable A, a variable B, and a variable C. These variables may be updated in the course of a process in which control device 200 executes user program 230 to control drive equipment 400.

Address space 220 is a memory area including an address of at least one variable node corresponding to each of at least one variable stored in variable space 210. In the example in Fig. 1, address space 220 includes addresses of a variable node A, a variable node B, and a variable node C. Each of the addresses of variable nodes A, B, and C includes information for accessing each of variables A, B, and C included in variable space 210.

User program 230 is a program describing a process for control device 200 to control drive equipment 400 as a control target. User program 230 is generated by support device 100 and installed in control device 200.

Communication management program 240 is a program for causing control device 200 to function as an OPC UA server, and describes a process for causing control device 200 to publish a publishable variable to external device 300 in response to an access request from external device 300. Communication management program 240 is generated by support device 100 and installed in control device 200.

User setting information 250 includes login information for managing a user who uses external device 300 to request access to data (a variable and the like) managed by control device 200. Hereinafter, in order to distinguish from a "user" such as a designer of user program 230, a user of control system 1, or an administrator of control system 1, the user who uses external device 300 to request access to data managed by control device 200 is also referred to as an "access user". Note that the "user" and the "access user" may be the same person or different persons. The access user who can access the data managed by control device 200 is registered in advance as user setting information 250 in control device 200. User setting information 250 is generated by support device 100 and downloaded to control device 200.

Publication setting information 260 includes information for specifying a publication setting of the data managed by control device 200 to external device 300. Publication setting information 260 is generated by support device 100 and downloaded to control device 200.

Control device 200 includes a publication management unit 270. In accordance with communication management program 240, publication management unit 270 publishes publishable data to external device 300 in response to an access request from external device 300. For example, upon reception of the request to access a variable from external device 300, publication management unit 270 authenticates an access user based on user setting information 250. After duly authenticating the user, publication management unit 270 determines based on publication setting information 260 whether or not publication of the variable that is a target of the access request is permitted. When publication of the variable that is the target of the access request is permitted, publication management unit 270 extracts an address for accessing the variable that is the target of the access request from address space 220, and publishes the address to external device 300 that is a request source. External device 300 can access the requested variable based on the address acquired from control device 200.

Thus, in control system 1, in response to a request from external device 300, control device 200 can cause a variable generated during execution of user program 230 to be published to external device 300. Further, control device 200 can authenticate the access user based on the user setting information and also can cause only the variable, which is permitted to be published, to be published to external device 300 based on the publication setting information.

However, it is important to enhance the security for publication of variables. Thus, in order to enhance the security, support device 100 according to the embodiment is configured such that the user specifies one of at least one role to conduct a publication setting of at least one variable to external device 300 according to the at least one role.

Specifically, support device 100 includes a provision unit 110 and a publication setting unit 120 as functions of development tool 150. Provision unit 110 provides a user interface (a publication setting screen, which will be described later) for the user to conduct a publication setting of at least one variable to external device 300, the at least one variable being stored in an instance generated during execution of user program 230. Further, the user interface is configured to allow the user to specify one of at least one role to conduct a publication setting of at least one variable to external device 300.

The "publication setting" includes at least one of: setting whether or not to permit external device 300 to read at least one variable according to at least one role; and setting whether or not to permit external device 300 to execute (e.g., write) at least one variable according to at least one role.

The "role" includes a role, a job title, a job grade, or a job position of an access user such as a designer of user program 230, a user of control system 1, or an administrator of control system 1. In control system 1 according to the embodiment, the "role" includes an observer, an operator, a maintainer, a designer, and an administrator. The observer is a person who simply observes (views) data (variables and the like) managed by control device 200. The operator is a person who operates control device 200. The maintainer is a person who performs maintenance of control device 200, drive equipment 400, and the like included in control system 1. The designer is a person who designs control device 200, drive equipment 400, and the like included in control system 1. The administrator is a person who manages control device 200, drive equipment 400, and the like included in control system 1, and also manages an observer, an operator, a maintainer, a designer, and the like. Support device 100 is configured to be capable of making a publication setting according to the role to which the access user belongs among the above-mentioned plurality of roles.

Further, since there are an enormous number of variables generated when control device 200 executes user program 230, it takes much time and effort to conduct a publication setting for each variable. Thus, support device 100 according to the embodiment is configured to allow a publication setting of a variable to external device 300 to be conducted by specifying at least one of: a publication setting of a variable that is conducted using an instance name for identifying an instance generated during execution of a function block; and a publication setting of a variable that is conducted using a namespace unique to a function block.

Specifically, the user interface provided by provision unit 110 of support device 100 is configured to allow the user to specify at least one of an instance name and a namespace to set whether or not to publish at least one variable to external device 300.

Publication setting unit 120 generates publication setting information 260 based on the setting conducted by the user through a user interface (a publication setting screen) provided by provision unit 110. Publication setting information 260 includes at least one of: information for setting whether or not to permit external device 300 to read at least one variable according to at least one role; and information for setting whether or not to permit external device 300 to execute (for example, write) at least one variable according to at least one role. Publication setting information 260 generated by publication setting unit 120 is downloaded to control device 200.

According to support device 100 having such a configuration, the user can specify one of at least one role, for example, to set whether or not to publish at least one variable to external device 300, and to set a variable to be read only and a variable to be executable among the variables to be published. Therefore, the security related to publication of the variable to external device 300 can be enhanced. Further, since the user can conduct a publication setting of a variable to external device 300 for each instance name or for each namespace, it is not necessary to conduct a publication setting for each of an enormous number of variables generated during execution of user program 230, so that the time and effort for making a publication setting can be reduced as much as possible.

### <B. Configuration of Control Device>

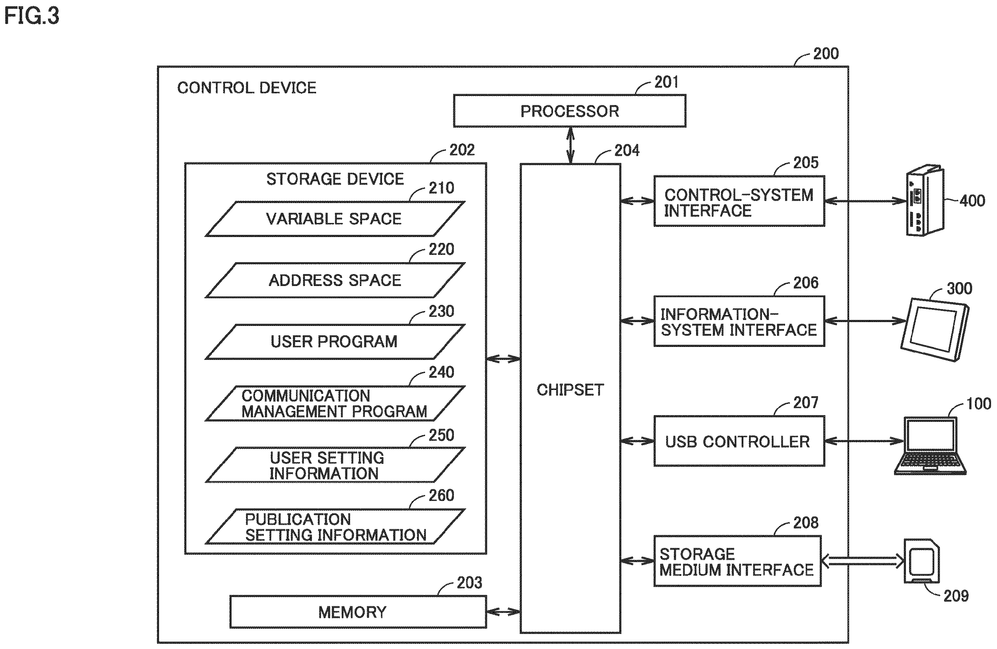

A hardware configuration of control device 200 will be hereinafter described with reference to Fig. 3. Fig. 3 is a diagram showing an example of the hardware configuration of control device 200. As shown in Fig. 3, control device 200 includes, as main components, a processor 201, storage device 202, a memory 203, a chipset 204, a control-system interface 205, an information-system interface 206, a USB controller 207, and a storage medium interface 208.

Processor 201 is a computing entity (a computer) that executes various programs to execute various processes. Processor 201 is configured, for example, of a central processing unit (CPU), a micro-processing unit (MPU), or the like. Although processor 201 has functions of executing programs to execute various processes, some or all of these functions may be implemented using dedicated hardware circuitry such as an application specific integrated circuit (ASIC) or a field-programmable gate array (FPGA). Processor 201 is not limited to a processor in a narrow sense that executes a process in a stored program mode like a CPU or an MPU, but may include hardwired circuitry such as an ASIC or an FPGA. Thus, processor 201 can also be read interchangeably as processing circuitry for which a process is defined in advance by a computer readable code and/or hardwired circuitry. Note that processor 201 may be configured of one chip or may be configured of a plurality of chips. Further, processor 201 and the processing circuitry associated therewith may be configured of a plurality of computers interconnected through wires or wirelessly via a local area network, a wireless network, or the like. Processor 201 and the processing circuitry associated therewith may be configured of a cloud computer that performs a computation remotely based on input data and then outputs the computation result to another remotely located device.

Storage device 202 stores various programs executed by processor 201, various pieces of data, or the like. Storage device 202 may be one or more non-transitory computer-readable media or may be one or more computer-readable storage media. Examples of storage device 202 include a hard disk drive (HDD), a solid state drive (SSD), and the like. In control device 200 according to the embodiment, storage device 202 stores variable space 210, address space 220, user program 230, communication management program 240, user setting information 250, and publication setting information 260.

Memory 203 includes a volatile storage area (for example, a working area) in which program codes, a work memory, and the like are temporarily stored when processor 201 executes various programs. Examples of memory 203 include a volatile memory such as a dynamic random access memory (DRAM) and a static random access memory (SRAM), or a non-volatile memory such as a read only memory (ROM) and a flash memory.

Chipset 204 has a relay function for managing and processing exchange of data between the devices constituting control device 200.

Control-system interface 205 is an interface that mediates exchange of data between control device 200 and drive equipment 400.

Information-system interface 206 is an interface that mediates exchange of data between control device 200 and external device 300.

USB controller 207 is an interface that mediates exchange of data between control device 200 and support device 100.

Storage medium interface 208 is configured such that a storage medium 209 is attachable thereto and detachable therefrom, and is an interface through which control device 200 writes various pieces of data such as user program 230, communication management program 240, user setting information 250, and publication setting information 260 onto storage medium 209 or control device 200 reads the various pieces of data from storage medium 209. Storage medium 209 may be one or more non-transitory computer-readable media such as a memory card, a removable disk, or a USB memory, or may be one or more computer-readable storage media.

### <C. Configuration of Support Device>

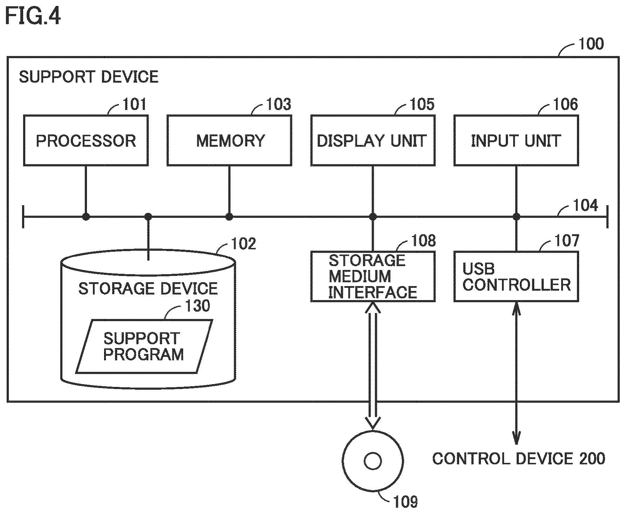

A hardware configuration of support device 100 will be hereinafter described with reference to Fig. 4. Fig. 4 is a diagram showing an example of the hardware configuration of support device 100. As shown in Fig. 4, support device 100 includes, as main components, a processor 101, a storage device 102, a memory 103, a bus 104, a display unit 105, an input unit 106, a USB controller 107, and a storage medium interface 108.

Processor 101 is a computing entity (a computer) that executes various programs to execute various processes. Processor 101 is configured, for example, of a CPU, an MPU, or the like. Although processor 101 has functions of executing programs to execute various processes, some or all of these functions may be implemented using dedicated hardware circuitry such as an ASIC or an FPGA. Processor 101 is not limited to a processor in a narrow sense that executes a process in a stored program mode like a CPU or an MPU, but may include hardwired circuitry such as an ASIC or an FPGA. Thus, processor 101 can also be read interchangeably as processing circuitry for which a process is defined in advance by a computer readable code and/or hardwired circuitry. Note that processor 101 may be configured of one chip or may be configured of a plurality of chips. Further, processor 101 and the processing circuitry associated therewith may be configured of a plurality of computers interconnected through wires or wirelessly via a local area network, a wireless network, or the like. Processor 101 and the processing circuitry associated therewith may be configured of a cloud computer that performs a computation remotely based on input data and then outputs the computation result to another remotely located device.

Storage device 102 stores various programs executed by processor 101, various pieces of data, or the like. Storage device 102 may be one or more non-transitory computer-readable media or may be one or more computer-readable storage media. Examples of storage device 102 include an HDD, an SSD, and the like. In support device 100 according to the embodiment, storage device 102 stores support program 130.

Memory 103 includes a volatile storage area (for example, a working area) in which program codes, a work memory, and the like are temporarily stored when processor 101 executes various programs. Examples of memory 103 include a volatile memory such as a DRAM and an SRAM, or a non-volatile memory such as a ROM and a flash memory.

Bus 104 has a relay function for managing and processing exchange of data between the devices constituting support device 100.

Display unit 105 is, for example, a display. Note that display unit 105 may be an interface serving to connect a display and configured to mediate exchange of data between support device 100 and the display. In other words, support device 100 may include a display as a component or may be provided separately from the display.

Input unit 106 is, for example, a peripheral device such as a keyboard or a mouse. Note that input unit 106 may be an interface serving to connect a peripheral device and configured to mediate exchange of data between support device 100 and the peripheral device. In other words, support device 100 may include a peripheral device such as a keyboard or a mouse as a component, or may be provided separately from the peripheral device.

USB controller 107 is an interface that mediates exchange of data between support device 100 and control device 200.

Storage medium interface 108 is configured such that a storage medium 109 is attachable thereto and detachable therefrom, and is an interface through which support device 100 writes various pieces of data such as support program 130 onto storage medium 109 or support device 100 reads the various pieces of data from storage medium 109. Storage medium 109 may be one or more non-transitory computer-readable media such as a memory card, a removable disk, or a USB memory, or may be one or more computer-readable storage media.

### <D. Configuration of External Device>

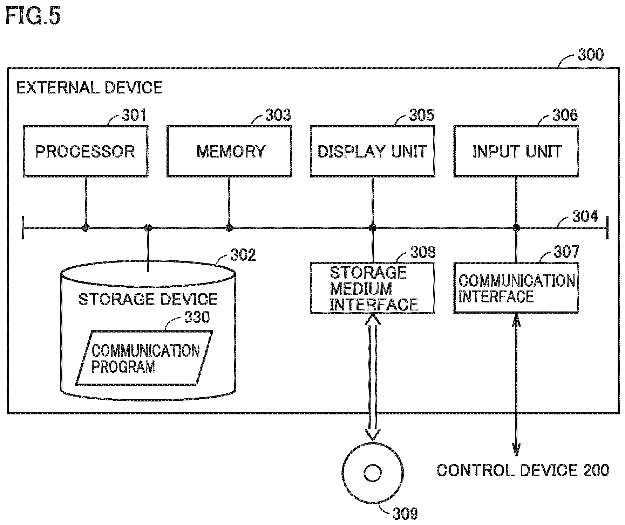

A hardware configuration of external device 300 will be hereinafter described with reference to Fig. 5. Fig. 5 is a diagram showing an example of the hardware configuration of external device 300. As shown in Fig. 5, external device 300 includes, as main components, a processor 301, a storage device 302, a memory 303, a bus 304, a display unit 305, an input unit 306, a communication interface 307, and a storage medium interface 308.

Processor 301 is a computing entity (a computer) that executes various programs to execute various processes. Processor 301 is configured, for example, of a CPU, an MPU, or the like. Although processor 301 has functions of executing a program to execute various processes, some or all of these functions may be implemented using dedicated hardware circuitry such as an ASIC or an FPGA. Processor 301 is not limited to a processor in a narrow sense that executes a process in a stored program mode like a CPU or an MPU, but may include hardwired circuitry such as an ASIC or an FPGA. Thus, processor 301 can also be read interchangeably as processing circuitry for which a process is defined in advance by a computer readable code and/or hardwired circuitry. Note that processor 301 may be configured of one chip or may be configured of a plurality of chips. Further, processor 301 and the processing circuitry associated therewith may be composed of a plurality of computers interconnected through wires or wirelessly via a local area network, a wireless network, or the like. Processor 301 and the processing circuitry associated therewith may be configured of a cloud computer that performs a computation remotely based on input data and then outputs the computation result to another remotely located device.

Storage device 302 stores various programs executed by processor 301, various pieces of data, or the like. Storage device 302 may be one or more non-transitory computer-readable media or may be one or more computer-readable storage media. Examples of storage device 302 include an HDD, an SSD, and the like. In external device 300 according to the embodiment, storage device 302 stores a communication program 330. Communication program 330 is a program for causing external device 300 to function as an OPC UA client, and describes a process for external device 300 to request access to a variable managed by control device 200.

Memory 303 includes a volatile storage area (for example, a working area) in which program codes, a work memory, and the like are temporarily stored when processor 301 executes various programs. Examples of memory 303 include a volatile memory such as a DRAM and an SRAM, or a non-volatile memory such as a ROM and a flash memory.

Bus 304 has a relay function for managing and processing exchange of data between the devices constituting external device 300.

Display unit 305 is, for example, a display. Note that display unit 305 may be an interface serving to connect a display and configured to mediate exchange of data between external device 300 and the display. In other words, external device 300 may include a display as a component or may be provided separately from the display.

Input unit 306 is, for example, a peripheral device such as a keyboard or a mouse. Note that input unit 306 may be an interface serving to connect a peripheral device and configured to mediate exchange of data between external device 300 and the peripheral device. In other words, external device 300 may include a peripheral device such as a keyboard or a mouse as a component, or may be provided separately from the peripheral device.

Communication interface 307 is an interface that mediates exchange of data between external device 300 and control device 200.

Storage medium interface 308 is configured such that a storage medium 309 is attachable thereto and detachable therefrom, and is an interface through which external device 300 writes various pieces of data such as communication program 330 onto storage medium 309 or external device 300 reads the various pieces of data from storage medium 309. Storage medium 309 may be one or more non-transitory computer-readable media such as a memory card, a removable disk, or a USB memory, or may be one or more computer-readable storage media.

### <E. Sequence Flow>

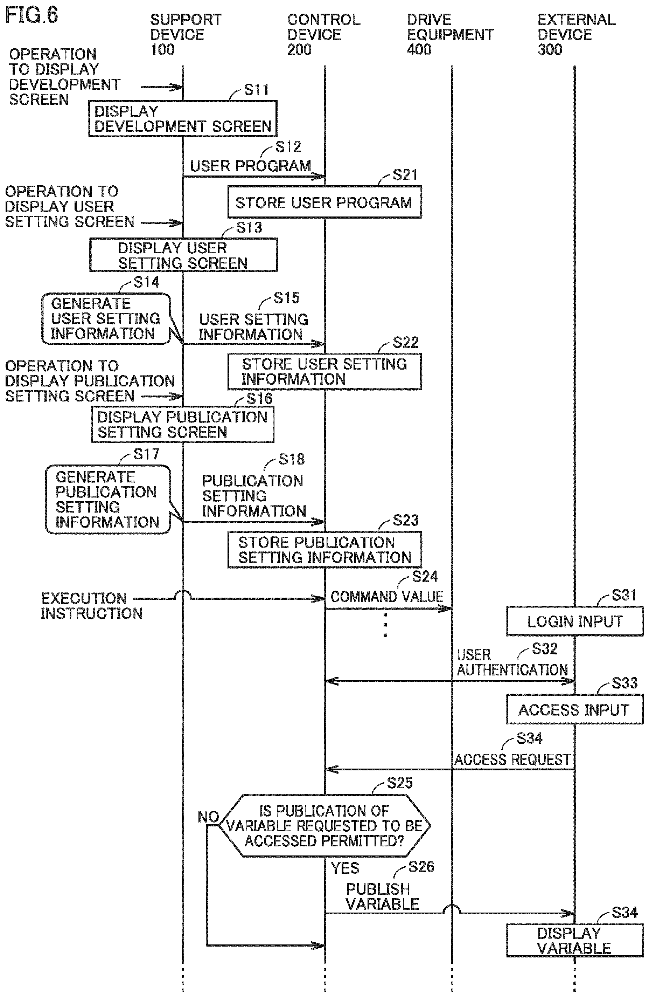

A flow of a process of each of support device 100, control device 200, drive equipment 400, and external device 300 will be hereinafter described with reference to Fig. 6. Fig. 6 is a sequence diagram showing a flow of the process of each of support device 100, control device 200, drive equipment 400, and external device 300. Each STEP (hereinafter indicated by "S") of support device 100 shown in Fig. 6 is implemented by processor 101 executing support program 130. Each STEP of control device 200 shown in Fig. 6 is implemented by processor 201 executing user program 230 and communication management program 240. Each STEP of external device 300 shown in Fig. 6 is implemented by processor 301 executing communication program 330.

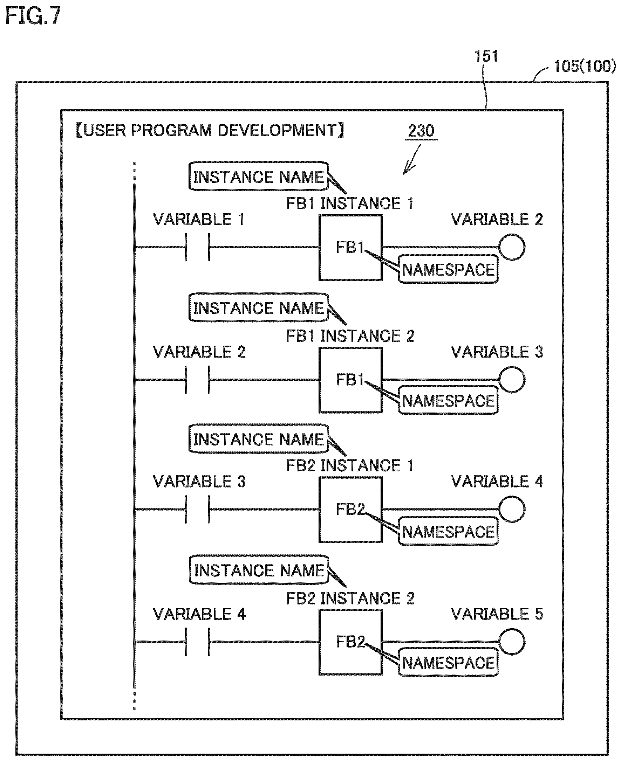

As shown in Fig. 6, upon reception of an operation for displaying a development screen, support device 100 causes display unit 105 to display the development screen (S11). As will be described later in detail with reference to Fig. 7, the user uses the development screen to develop user program 230. Support device 100 compiles user program 230 and transmits it to control device 200 as a file in an executable form (S12).

Upon reception of user program 230 transmitted from support device 100, control device 200 causes storage device 202 to store user program 230 (S21).

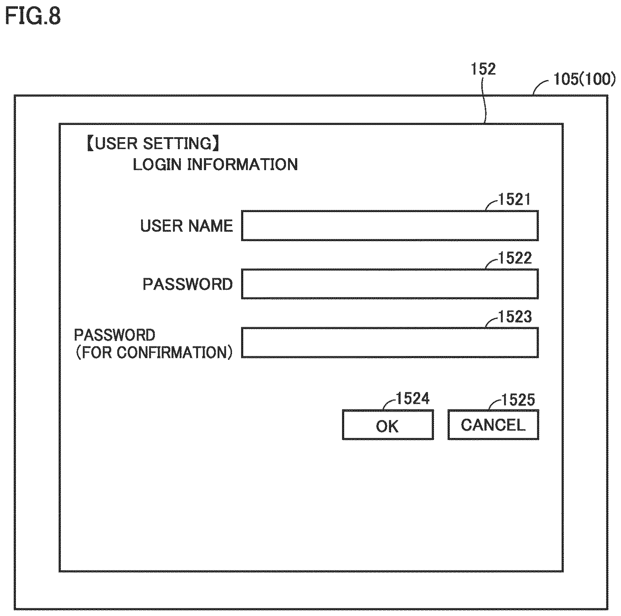

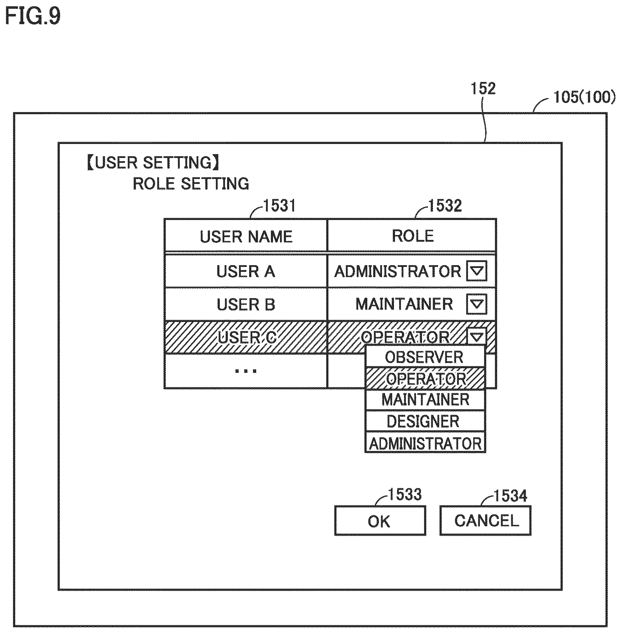

Upon reception of the operation for displaying a user setting screen, support device 100 causes display unit 105 to display the user setting screen (S13). As will be described later in detail with reference to Figs. 8 and 9, through the user setting screen, the user can register a specific person as an access user of the network publication service and assign a role to the access user. Support device 100 generates user setting information 250 based on the details input into the user setting screen (S14). Support device 100 transmits user setting information 250 to control device 200 (S15).

Upon reception of user setting information 250 transmitted from support device 100, control device 200 causes storage device 202 to store user setting information 250 (S22).

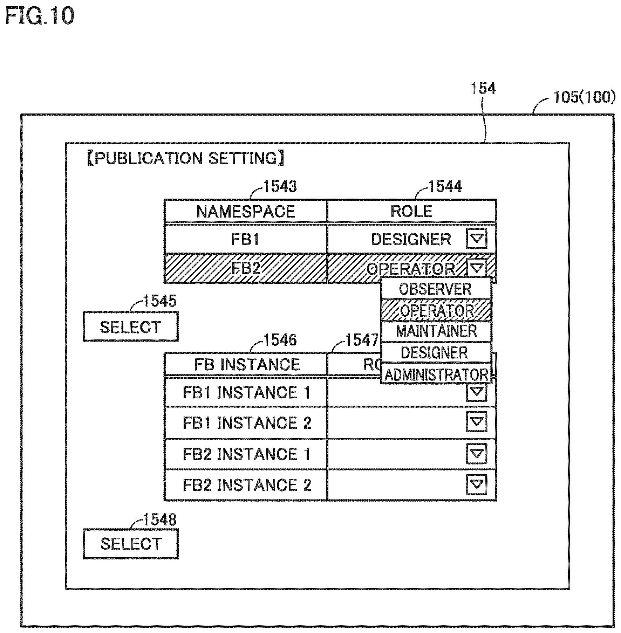

Upon reception of the operation for displaying the publication setting screen, support device 100 causes display unit 105 to display the publication setting screen (S16). As will be described later in detail with reference to Figs. 10 to 14, through the publication setting screen, the user inputs the information about the publication setting to external device 300 about data (variables and the like) managed by control device 200. Support device 100 generates publication setting information 260 based on the details input into the publication setting screen (S17). Support device 100 transmits publication setting information 260 to control device 200 (S18).

Upon reception of publication setting information 260 transmitted from support device 100, control device 200 causes storage device 202 to store publication setting information 260 (S23).

Upon reception of an instruction to execute user program 230, control device 200 executes user program 230 to control drive equipment 400. In the case where user program 230 is a cyclic execution-type program, control device 200 repeatedly executes a group of instructions included in user program 230 every predetermined control cycle. More specifically, control device 200 executes the first line to the last line of user program 230 in one control cycle, and executes the first line to the last line of user program 230 again in the next control cycle in one control cycle. Control device 200 generates a command value for each control cycle and outputs the command value to drive equipment 400.

As described above, when control device 200 executes user program 230 to control drive equipment 400, a variable is stored in each instance determined in advance by user program 230.

In the case where the access user accesses the variable generated during execution of user program 230, external device 300 accepts login information input by the access user (S31).

Upon reception of the login information input to external device 300, control device 200 compares the login information with login information included in user setting information 250. As a result of this comparison, when the login information input to external device 300 matches with the login information included in user setting information 250, control device 200 determines that the authentication of the access user is valid.

When the access user specifies a variable to which the access user desires to access, external device 300 accepts information for specifying the variable input by the access user (S33). External device 300 makes a request to control device 200 for accessing the variable specified by the access user (S34).

Upon reception of the access request from external device 300, control device 200 determines based on publication setting information 260 whether or not the variable that is a target of the access request is permitted to be published to the access user (S25). When the variable as the target of the access request is not permitted to be published to the access user (NO in S25), control device 200 proceeds the process to a next process without causing the variable as the target of the access request to be published to the access user. On the other hand, when the variable as the target of the access request is permitted to be published to the access user (YES in S25), control device 200 transmits an address for accessing the variable as the target of the access request to external device 300 in order to cause the variable as the target of the access request to be published to external device 300 (S26).

Based on the address received from control device 200, external device 300 causes display unit 305 to display the variable that is the target of the access request (S34).

Thus, when the access user requests access to the variable, control device 200 can cause the variable to be published to the access user on condition that publication of the variable is permitted based on the publication setting set by support device 100.

### <F. Development Screen of User Program>

A development screen 151 of user program 230 will be hereinafter described with reference to Fig. 7. Fig. 7 is a diagram showing an example of a development screen that is a user interface provided by support device 100.

User program 230 is described in a ladder diagram. On development screen 151, the user combines arbitrary function blocks or defines the relation between an input and an output of variables or function blocks, and thereby, can design user program 230 supporting drive equipment 400 that is a target to be controlled.

User program 230 includes at least one function block. For example, as shown in Fig. 7, user program 230 includes a function block (FB definition) denoted by "FB1" as a namespace and a function block (FB definition) denoted by "FB2" as a namespace. FB1 is defined in user program 230 as FB1 corresponding to an instance 1 and FB1 corresponding to an instance 2. FB1 corresponding to instance 1 is denoted by "FB1 instance 1" as an instance name. FB1 corresponding to instance 2 is denoted by "FB2 instance 1" as an instance name. FB2 is defined in user program 230 as FB2 corresponding to instance 1 and FB2 corresponding to instance 2. FB2 corresponding to instance 1 is denoted by "FB2 instance 1" as an instance name. FB2 corresponding to instance 2 is denoted by "FB2 instance 2" as an instance name.

The function block corresponding to FB1 instance 1 executes its function based on a variable 1 associated with the input of the function block. The result of execution of the function block corresponding to FB1 instance 1 is reflected in a variable 2 associated with the output of the function block. The function block corresponding to FB1 instance 2 executes its function based on variable 2 associated with the input of the function block. The result of execution of the function block corresponding to FB1 instance 2 is reflected in a variable 3 associated with the output of the function block. The function block corresponding to FB2 instance 1 executes its function based on variable 3 associated with the input of the function block. The result of execution of the function block corresponding to FB2 instance 1 is reflected in a variable 4 associated with the output of the function block. The function block corresponding to FB2 instance 2 executes its function based on variable 4 associated with the input of the function block. The result of execution of the function block corresponding to FB2 instance 2 is reflected in a variable 5 associated with the output of the function block.

In this way, the user can develop arbitrary user program 230 by combining variables or function blocks on development screen 151.

### <G. User Setting Screen>

A user setting screen 152 will be hereinafter described with reference to Figs. 8 and 9. Figs. 8 and 9 each are a diagram showing an example of user setting screen 152 that is a user interface provided by support device 100. User setting screen 152 shown in Fig. 8 is a user interface through which an access user is registered. As shown in Fig. 8, user setting screen 152 includes input fields 1521, 1522, and 1523, and icons 1524 and 1525.

Input field 1521 is an input field into which a user name is input. Input field 1522 is an input field into which a password is input. Input field 1523 is an input field into which a password for confirmation is input. Icon 1524 is clicked for fixing the input. Icon 1525 is clicked for canceling the input.

On user setting screen 152, the user fills input field 1521 with a user name of a specific person desired to be registered in the network publication service, and fills each of input fields 1522 and 1523 with a password of the specific person, and then clicks icon 1524. Thereby, on user setting screen 152, the user can register the specific person as an access user to the network publication service.

User setting screen 152 shown in Fig. 9 is a user interface through which a role is assigned to each registered access user. As shown in Fig. 9, user setting screen 152 includes selection fields 1531 and 1532 and icons 1533 and 1534.

Selection field 1531 is a selection field through which the user selects an arbitrary access user from at least one registered access user. In the example in Fig. 9, selection field 1531 includes, as options, an access user denoted as a "user A", an access user denoted as a "user B", and an access user denoted as a "user C". Selection field 1532 is a selection field through which the user assigns an arbitrary role to each access user from among a plurality of predetermined roles. In the example in Fig. 9, selection field 1532 includes an "observer", an "operator", a "maintainer", a "designer", and an "administrator" as options. Note that selection field 1532 may include roles other than the observer, the operator, the maintainer, the designer, and the administrator.

The user can select one role from at least one role included in selection field 1532 in a pull-down manner for each access user based on the user name of the access user indicated in selection field 1531 as a clue. For example, in the example in Fig. 9, an administrator is assigned to user A, a maintainer is assigned to user B, and an operator is assigned to user C.

In this way, by using user setting screen 152, the user can register an access user and assign a role to the registered access user.

### <H. Publication Setting Screen>

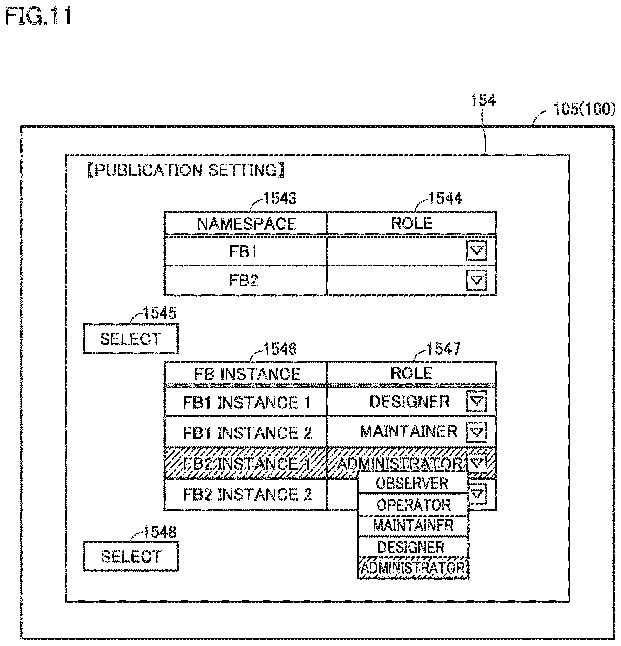

A publication setting screen 154 will be hereinafter described with reference to Figs. 10 to 14. Figs. 10 to 14 each are a diagram showing an example of publication setting screen 154 that is a user interface provided by support device 100. As shown in Figs. 10 and 11, publication setting screen 154 includes icons 1545 and 1548, and selection fields 1543, 1544, 1546, and 1547.

Selection field 1543 is a selection field through which the user selects an arbitrary function block from at least one function block used in user program 230. In the example in each of Figs. 10 and 11, selection field 1543 includes a function block denoted as "FB1" and a function block denoted as "FB2" as options. Selection field 1544 is a selection field through which the user assigns an arbitrary role among a plurality of predetermined roles to a function block selected in selection field 1543. In the example in Fig. 10, selection field 1544 includes an "observer", an "operator", a "maintainer", a "designer", and an "administrator" as options. Note that selection field 1544 may include roles other than the observer, the operator, the maintainer, the designer, and the administrator. Icon 1545 is clicked for designating the function block selected in selection field 1543.

Selection field 1546 is a selection field through which the user selects an arbitrary instance from at least one instance defined in user program 230. In the example in each of Figs. 10 and 11, selection field 1546 includes, as options, an instance denoted as "FB1 instance 1", an instance denoted as "FB1 instance 2", an instance denoted as "FB2 instance 1", and an instance denoted as "FB2 instance 2". Selection field 1547 is a selection field through which the user assigns an arbitrary role among a plurality of predetermined roles to the instance selected in selection field 1546. In the example in Fig. 11, selection field 1547 includes an "observer", an "operator", a "maintainer", a "designer", and an "administrator" as options. Note that selection field 1547 may include roles other than the observer, the operator, the maintainer, the designer, and the administrator. Icon 1548 is clicked for designating the instance selected in selection field 1546.

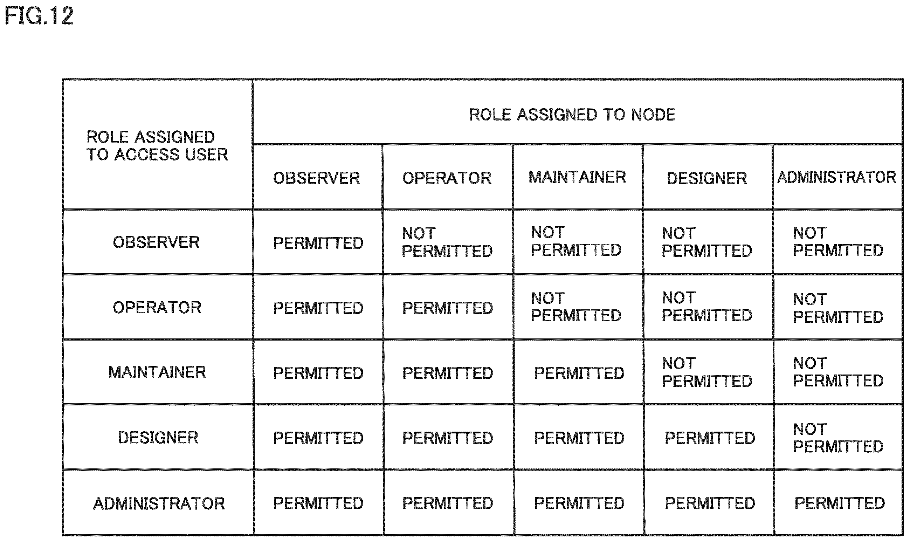

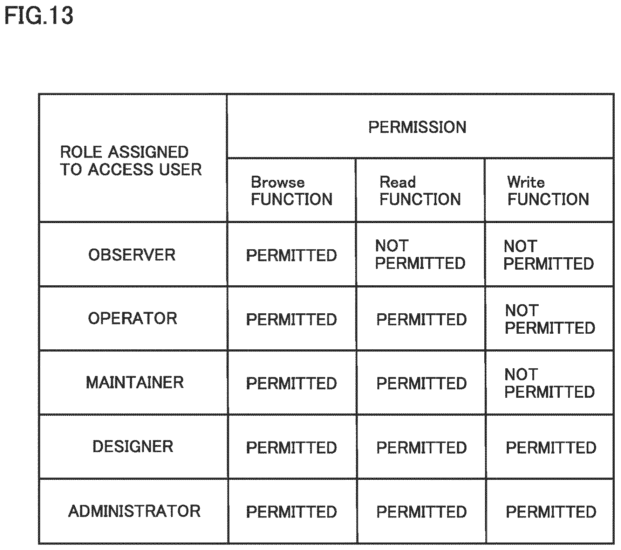

In this case, the access authority for each role will be hereinafter described with reference to Figs. 12 and 13. Figs. 12 and 13 each are a diagram showing an example of the access authority for each role. As shown in Fig. 12, the access authority for each role is determined in advance according to the degree of importance of the role.

For example, as shown in Fig. 12, when the role assigned to the access user is an "observer", the variable permitted to be published to the access user is a variable corresponding to the variable node assigned to the "observer". In other words, the access user who is the "observer" can access only the variable accessible by the "observer".

When the role assigned to the access user is an "operator", the variable permitted to be published to the access user is a variable corresponding to the variable node assigned to each of the "observer" and the "operator". In other words, the access user who is the "operator" can access the variable accessible by each of the "observer" and the "operator".

When the role assigned to the access user is a "maintainer", the variable permitted to be published to the access user is a variable corresponding to the variable node assigned to each of the "observer", the "operator", and the "maintainer". In other words, the access user who is the "maintainer" can access the variable accessible by each of the "observer", the "operator", and the "maintainer".

When the role assigned to the access user is a "designer", the variable permitted to be published to the access user is a variable corresponding to the variable node assigned to each of the "observer", the "operator", the "maintainer", and the "designer". In other words, the access user who is the "designer" can access the variable accessible by each of the "observer", the "operator", the "maintainer", and the "designer".

When the role assigned to the access user is an "administrator", the variable permitted to be published to the access user is a variable corresponding to the variable node assigned to each of the "observer", the "operator", the "maintainer", the "designer", and the "administrator". In other words, the access user who is the "administrator" can access the variable accessible by each of the "observer", the "operator", the "maintainer", the "designer", and the "administrator".

Thus, the number of variables to which the access user has authority to access is the smallest in the case of the access user who is an "observer" and is the largest in the case of the access user who is an "administrator". In the above-described example, the variable nodes assigned to the "observer", the "operator", the "maintainer", the "designer", and the "administrator" can be set in advance by the user using support device 100. For example, by using support device 100, the user can assign an accessible variable to each of the "observer", the "operator", the "maintainer", the "designer", and the "administrator" from among at least one variable managed by control device 100.

Further, as shown in Fig. 13, when the role assigned to the access user is an "observer", the function executable for the variable permitted to be published is a Browse function. In other words, the access user who is the "observer" can only browse the name of the variable permitted to be published.

When the role assigned to the access user is an "operator" or a "maintainer", the functions executable for the variable permitted to be published are a Browse function and a Read function. In other words, the access user who is the "operator" or the "maintainer" can only browse the name of the variable permitted to be published and read the value of this variable.

When the role assigned to the access user is a "designer" or an "administrator", the functions executable for the variable permitted to be published are a Browse function, a Read function, and a Write function. In other words, the access user who is the "designer" or the "administrator" can browse the name of the variable permitted to be published, read the value of this variable, and write the value onto this variable. Note that writing a value onto a variable corresponds to executing a variable.

The access authority for each role shown in Fig. 13 is merely an example, and another access authority may be given to each of the observer, the operator, the maintainer, the designer, and the administrator. For example, the observer may be permitted to execute only the Browse function, whereas the operator, the maintainer, the designer, and the administrator may be permitted to execute all of the Browse function, the Read function, and the Write function. Alternatively, the functions permitted for the observer, the operator, the maintainer, the designer, and the administrator may be different from each other, or may be partially or entirely the same.

As shown in Fig. 10, when the user specifies a function block (a namespace) to conduct a publication setting, the user specifies one function block from among the function block denoted as "FB1" and the function block denoted as "FB2" that are included in selection field 1543, and then clicks icon 1545. Thereby, the user can select one function block from at least one function block included in selection field 1543.

Further, the user can select one role from at least one role included in selection field 1544 in a pull-down manner for the function block selected in selection field 1543. For example, in the example in Fig. 10, an operator is assigned to a function block denoted as "FB2". Thereby, among the variables generated during execution of the function block denoted as "FB2", only the variable permitted to be published to the operator is permitted to be published by control device 200. In other words, control device 200 is configured to cause the variable generated during execution of the function block denoted as "FB2" to be published to each of the operator, the maintainer, the designer, and the administrator based on publication setting information 260. Also in this case, when either FB2 instance 1 or FB2 instance 2 is executed, control device 200 causes the variable generated during the execution to be published to the access user according to the role.

As shown in Fig. 11, when the user specifies an instance (an instance name) to conduct a publication setting, the user specifies one instance from among "FB1 instance 1", "FB1 instance 2", "FB2 instance 1", and "FB2 instance 2" included in selection field 1546, and then clicks icon 1548. Thereby, the user can select one instance from at least one instance included in selection field 1546.

Further, the user can select one role from at least one role included in selection field 1547 in a pull-down manner for the instance selected in selection field 1546. For example, in the example in Fig. 11, an administrator is assigned to FB2 instance 1. Thereby, among the variables generated during execution of FB2 instance 1, only the variable permitted to be published to the administrator is permitted to be published by control device 200. In other words, control device 200 is configured to cause the variable generated during execution of FB2 instance 1 to be published only to the administrator based on publication setting information 260. For the instances other than FB2 instance 1, i.e., for FB1 instance 1, FB1 instance 2, and FB2 instance 2, control device 200 determines whether or not to publish each variable according to each individual publication setting.

Thus, the user assigns a role to each of the function blocks and the instances and thereby can conduct a publication setting of a variable according to each role determined in advance for the access user. Thereby, the user can enhance the security related to publication of each variable to external device 300.

Further, the user can conduct a publication setting of a variable using a namespace unique to a function block, and can also conduct a publication setting of a variable using an instance name for identifying an instance generated during execution of the function block. Thereby, the user does not need to conduct a publication setting for each of an enormous number of variables generated during execution of user program 230, so that the time and effort for making a publication setting can be reduced as much as possible. Further, the user can shorten the time required for the publication setting and can also reduce errors in the publication setting. As a result, the user can also reduce the development cost by focusing the time and effort required for publication settings on other advanced work.

Further, by making a publication setting of a variable using the namespace, the user can conduct a publication setting for each variable used in the function block selected by the user, for example, without considering to which instance each function block corresponds. On the other hand, by making a publication setting of a variable using the instance name, the user can conduct a publication setting only for the variable used in the instance selected by the user, for example, among a plurality of instances configured in the same function block. Thereby, the user can more specifically and efficiently conduct a publication setting of the variable to external device 300.

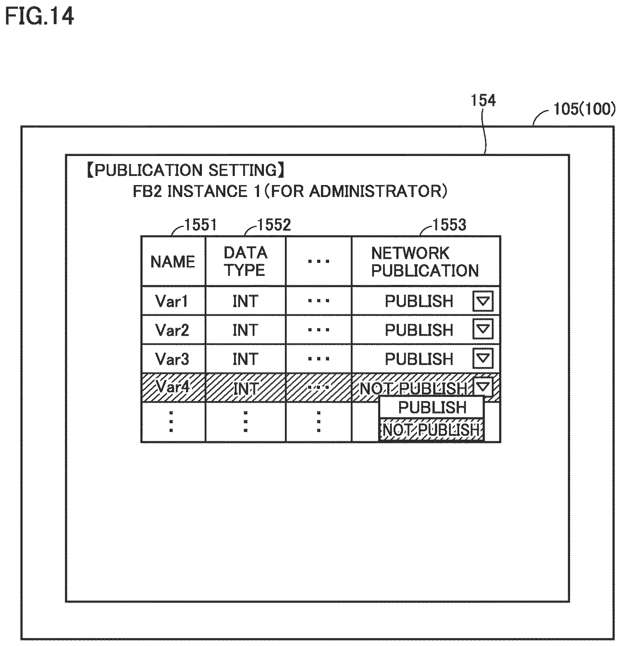

As shown in Fig. 14, support device 100 may be configured to allow a setting to be conducted as to whether or not to publish, to external device 300, each of at least one variable stored in the specified instance. For example, as shown in Fig. 14, publication setting screen 154 includes a name field 1551 indicating the name of each variable stored in one instance, a data type field 1552 indicating the type of data of each variable, and a network publication field 1553 indicating the type of network publication.

When the user selects one selected instance in selection field 1546 shown in each of Figs. 10 and 11, at least one variable corresponding to the role used in the selected instance is shown in name field 1551 as an option. The user can select "publication" or "non-publication" in network publication field 1553 in a pull-down manner for each variable based on the name of the variable indicated in name field 1551 as a clue. For example, in the example in Fig. 14, for FB2 instance 1 for which publication is permitted as an entire instance and to which the administrator is assigned, "publication" is selected for Var1, Var2, and Var3 accessible by the administrator. In this case, control device 200 permits publication of Var1, Var2, and Var3 to external device 300. On the other hand, for FB2 instance 1 for which publication is permitted as an entire instance and to which the administrator is assigned, "non-publication" is selected for Var 4 accessible by the administrator. In this case, control device 200 does not permit publication of Var4 to external device 300 even if the access user is an administrator.

In this way, the user can further conduct a publication setting also for each of at least one variable stored in the instance permitted to be published, and therefore, can more specifically and efficiently conduct a publication setting of the variable to external device 300.

### <I. Modifications>

The present disclosure is not limited to the above-described embodiments, but various modifications and applications are possible. Specifically, support device 100 according to the embodiment enables: a publication setting of a variable using a namespace; and a publication setting of a variable using an instance name. Thus, support device 100 may further include a configuration for solving the inconvenience occurring when both of these publication settings are simultaneously conducted.

For example, when the user assigns an operator to FB2, a publication setting is conducted for the access user to which an operator, a maintainer, a designer, or an administrator is assigned, such that the variable generated during execution of the function block denoted as "FB2" is published. On the other hand, when the user assigns an administrator to FB2 instance 1, a publication setting is conducted only for the access user to which the administrator is assigned, such that the variable generated during execution of FB2 instance 1 is published. In such a case, in the publication setting conducted using the namespace, for the function block denoted as "FB2", the variable is permitted to be published to the access user to which the operator, the maintainer, the designer, or the administrator is assigned. On the other hand, in the publication setting conducted using the instance, for FB2 instance 1, the variable is permitted to be published only to the access user to which the administrator is assigned. Accordingly, inconsistency may occur therebetween.

Thus, support device 100 may be configured to allow for only one of the publication setting conducted using the namespace and the publication setting conducted using the instance.

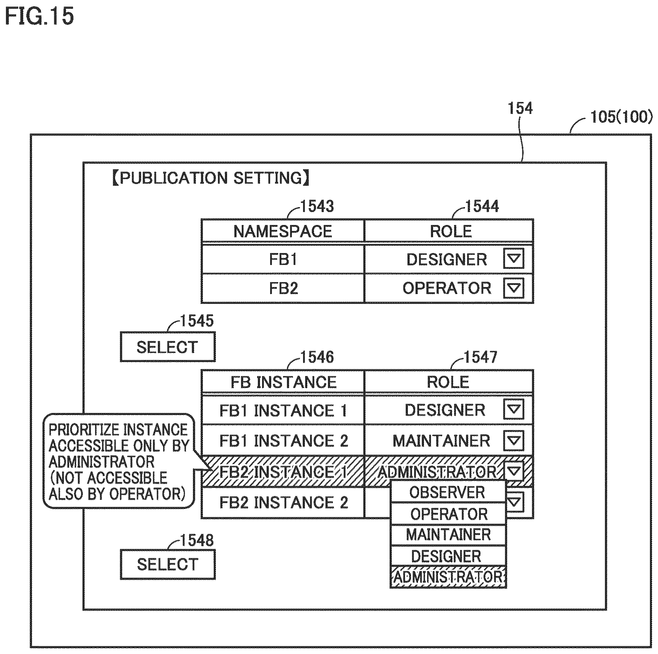

As shown in Figs. 15 to 17, support device 100 may be configured to prioritize one of the publication setting conducted using the namespace and the publication setting conducted using the instance. Figs. 15 to 17 each are a diagram showing a modification of publication setting screen 154 that is a user interface provided by support device 100.

As shown in Fig. 15, publication setting information 260 may include information for setting whether or not to publish the variable specified by the instance name to external device 300 with priority over the variable specified by the namespace. In this way, for example, even in the case where the variable is permitted to be published to the access user to which the operator, the maintainer, the designer, or the administrator is assigned for the function block denoted as "FB2" in the publication setting conducted using the namespace, whereas the variable is permitted to be published only to the access user to which the administrator is assigned for FB2 instance 1 in the publication setting conducted using the instance, control device 200 allows the variable used in FB2 instance 1 to be published, based on publication setting information 260, to external device 300 only for the access user to which the administrator is assigned. Therefore, inconsistency therebetween can be avoided.

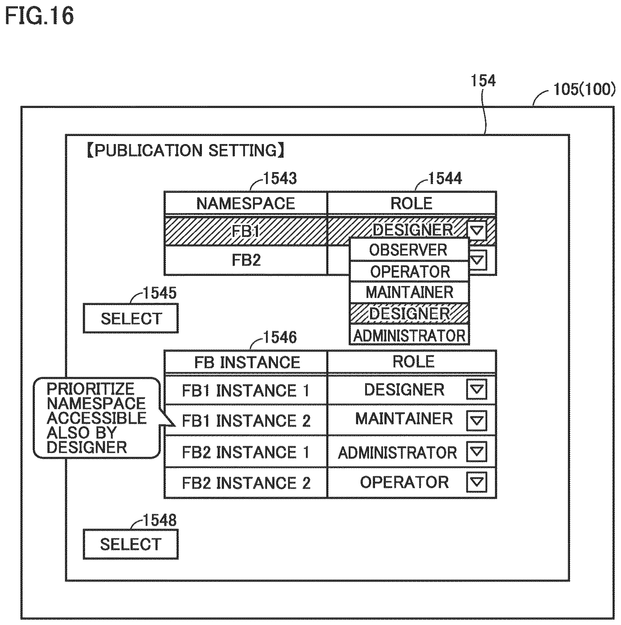

As shown in Fig. 16, publication setting information 260 may include information for setting whether or not to publish the variable specified by the namespace to external device 300 with priority over the variable specified by the instance name. In this way, for example, even in the case where the variable is permitted to be published to the access user to which the operator, the maintainer, the designer, or the administrator is assigned for the function block denoted as "FB2" in the publication setting conducted using the namespace, whereas the variable is permitted to be published only to the access user to which the administrator is assigned for FB2 instance 1 in the publication setting conducted using the instance, control device 200 causes the variable used in FB2 instance 1 using FB2 to be published, based on publication setting information 260, to external device 300 for the access user to which the operator, the maintainer, the designer, or the administrator is assigned. Therefore, inconsistency therebetween can be avoided.

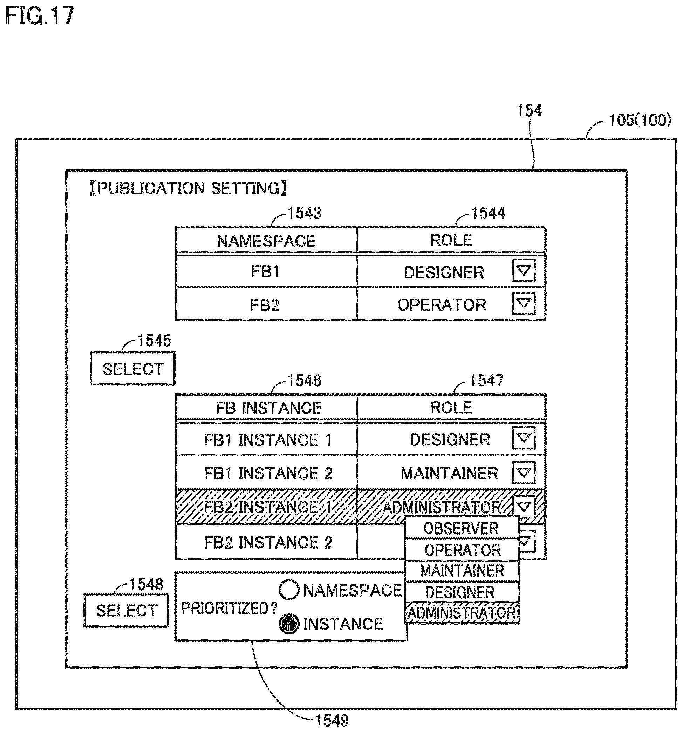

As shown in Fig. 17, publication setting screen 154 includes a selection field 1549 through which the user sets which one of the variable corresponding to the namespace and the variable corresponding to the instance name is prioritized to be published to external device 300. When the user selects one of the namespace and the instance name in selection field 1549 to be prioritized for the publication setting, support device 100 generates publication setting information 260 by priority for the one selected by the user. In this way, for example, when the user selects the instance name in selection field 1549, control device 200 causes the variable used in FB2 instance 1 to be published, based on publication setting information 260, to external device 300 only for the access user to which the administrator is assigned, with the result that inconsistency therebetween can be avoided.

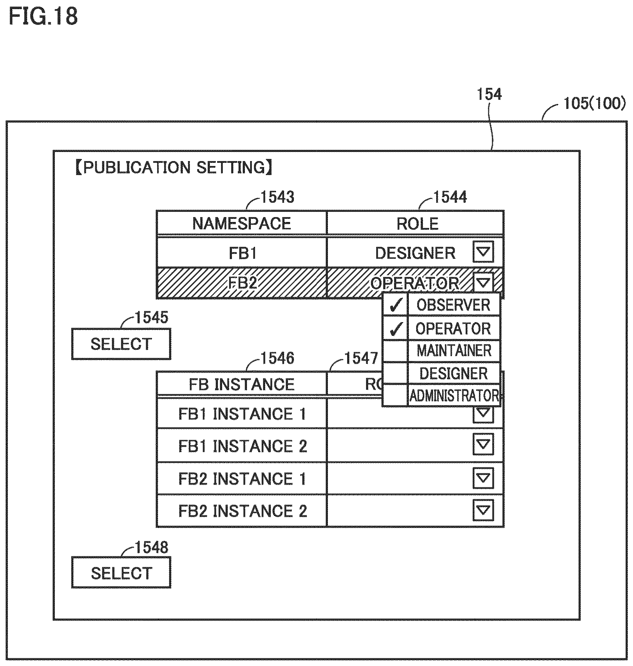

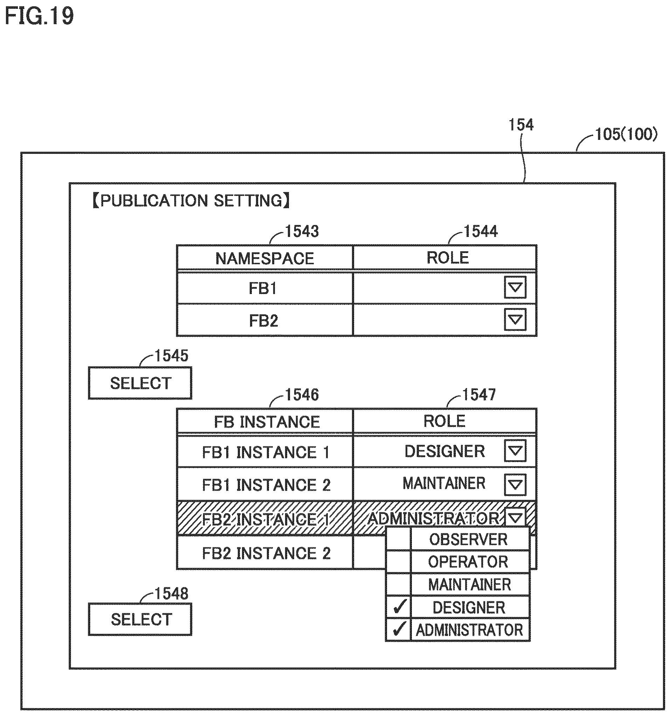

Further, as shown in Figs. 18 and 19, support device 100 may be configured to assign not only one role but also a plurality of roles to each of the namespace and the instance. Figs. 18 and 19 each are a diagram showing a modification of the publication setting screen that is the user interface provided by support device 100.

As shown in Fig. 18, the user can select a plurality of roles from at least one role included in selection field 1544 in a pull-down manner for the function block selected in selection field 1543. For example, in the example in Fig. 18, an observer and an operator are assigned to the function block denoted as "FB2". In this case, control device 200 is configured to cause the variable generated during execution of the function block denoted as "FB2" to be published to each of the observer and the operator based on publication setting information 260.

As shown in Fig. 19, the user can select a plurality of roles from at least one role included in selection field 1547 in a pull-down manner for the instance selected in selection field 1546. For example, in the example in Fig. 19, a designer and an administrator are assigned to FB2 instance 1. In this case, control device 200 is configured to cause the variable generated during execution of FB2 instance 1 to be published to each of the designer and the administrator based on publication setting information 260.

### <J. Additional Aspects>

As described above, the present embodiment includes the following disclosure.

### (Configuration 1)

A support device (100) that supports a control device (200) configured to control a control target according to a user program (230), the support device (100) comprising:
a provision unit (110) that provides a user interface for allowing a user to conduct a publication setting of at least one variable to an external device (300), the at least one variable being generated during execution of the user program; and
a publication setting unit (120) that generates publication setting information (260) based on the publication setting conducted by the user using the user interface, wherein
the control device is configured to manage publication of the at least one variable to the external device based on the publication setting information, the at least one variable being generated during execution of the user program,
the publication setting information includes at least one of:
   information for setting whether or not to permit the external device to read the at least one variable according to at least one role; and
   information for setting whether or not to permit the external device to execute the at least one variable according to the at least one role, and
the user interface is configured to allow the user to specify one of the at least one role to conduct the publication setting.

### (Configuration 2)

The support device according to Configuration 1, wherein
the at least one role includes:
   a first role; and
   a second role, and
the at least one variable of the second role is larger in number than the at least one variable of the first role, the at least one variable being permitted to be published to the external device.

### (Configuration 3)

The support device according to Configuration 2, wherein
the at least one variable that is published to the external device when the second role is specified includes all of the at least one variable that is permitted to be published to the external device when the first role is specified, and
the at least one variable that is permitted to be published to the external device when the first role is specified does not include all of the at least one variable that is permitted to be published to the external device when the second role is specified.

### (Configuration 4)

The support device according to any one of Configurations 1 to 3, wherein
the user program includes first identification information for identifying an instance generated during execution of a function block included in the user program,
the function block has second identification information that is unique,
the at least one variable used during the execution is determined in advance in the function block, and
the user interface is configured to allow the user to specify at least one of the first identification information and the second identification information to conduct the publication setting.

### (Configuration 5)

The support device according to Configuration 4, wherein the user interface is configured to allow the user to conduct the publication setting of each of the at least one variable stored in the instance that corresponds to the first identification information specified by the user.

### (Configuration 6)

The support device according to Configuration 4 or 5, wherein the publication setting information includes information for which the publication setting conducted using the first identification information is prioritized over the publication setting conducted using the second identification information.

### (Configuration 7)

The support device according to Configuration 4 or 5, wherein the publication setting information includes information for which the publication setting conducted using the second identification information is prioritized over the publication setting conducted using the first identification information.

### (Configuration 8)

The support device according to Configuration 4 or 5, wherein the user interface is configured to allow the user to select which one of the publication setting conducted using the first identification information and the publication setting conducted using the second identification information is prioritized.

### (Configuration 9)

A control method for a support device (100) that supports a control device (200) configured to control a control target according to a user program (230), the control method comprising:
providing (S16) a user interface for allowing a user to conduct a publication setting of at least one variable to an external device (300), the at least one variable being generated during execution of the user program; and
generating (S17) publication setting information based on the publication setting conducted by the user using the user interface, wherein
the control device is configured to manage publication of the at least one variable to the external device based on the publication setting information, the at least one variable being generated during execution of the user program,
the publication setting information includes at least one of:
   information for setting whether or not to permit the external device to read the at least one variable according to at least one role; and
   information for setting whether or not to permit the external device to execute the at least one variable according to the at least one role, and
the user interface is configured to allow the user to specify one of the at least one role to conduct the publication setting.

### (Configuration 10)

A support program (130) for supporting a control device (200) configured to control a control target according to a user program (230), the support program (130) causing a computer (101) to perform:
providing (S16) a user interface for allowing a user to conduct a publication setting of at least one variable to an external device, the at least one variable being generated during execution of the user program; and
generating (S17) publication setting information based on the publication setting conducted by the user using the user interface, wherein
the control device is configured to manage publication of the at least one variable to the external device based on the publication setting information, the at least one variable being generated during execution of the user program,
the publication setting information includes at least one of:
   information for setting whether or not to permit the external device to read the at least one variable according to at least one role; and
   information for setting whether or not to permit the external device to execute the at least one variable according to the at least one role, and
the user interface is configured to allow the user to specify one of the at least one role to conduct the publication setting.

### <K. Advantages>

According to support device 100 of the embodiment, the user can specify one of at least one role to set whether or not to publish at least one variable to external device 300, so that the security related to publication of the variable to external device 300 can be enhanced.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 control system, 10 control-system network, 20 information-system network, 100 support device, 101, 201, 301 processor, 102, 202, 302 storage device, 103, 203, 303 memory, 104, 304 bus, 105, 305 display unit, 106, 306 input unit, 107, 207 USB controller, 108, 208, 308 storage medium interface, 109, 209, 309 storage medium, 110 provision unit, 120 publication setting unit, 130 support program, 150 development tool, 151 development screen, 152 user setting screen, 154 publication setting screen, 200 control device, 204 chipset, 205 control-system interface, 206 information-system interface, 210 variable space, 220 address space, 230 user program, 240 communication management program, 250 user setting information, 260 publication setting information, 270 publication management unit, 300 external device, 307 communication interface, 330 communication program, 400 drive equipment, 400A robot controller, 400B servo driver, 400C sensor, 401A robot, 401B servo motor, 1521, 1522, 1523 input field, 1524, 1525, 1533, 1534, 1545, 1548 icon, 1531, 1532, 1543, 1544, 1546, 1547, 1549 selection field, 1551 name field, 1552 data type field, 1553 network publication field.

## Claims

1. A support device that supports a control device configured to control a control target according to a user program, the support device comprising:
a provision unit that provides a user interface for allowing a user to conduct a publication setting of at least one variable to an external device, the at least one variable being generated during execution of the user program; and
a publication setting unit that generates publication setting information based on the publication setting conducted by the user using the user interface, wherein
the control device is configured to manage publication of the at least one variable to the external device based on the publication setting information, the at least one variable being generated during execution of the user program,
the publication setting information includes at least one of:
information for setting whether or not to permit the external device to read the at least one variable according to at least one role; and
information for setting whether or not to permit the external device to execute the at least one variable according to the at least one role, and
the user interface is configured to allow the user to specify one of the at least one role to conduct the publication setting.

2. The support device according to claim 1, wherein
the at least one role includes:
a first role; and
a second role, and
the at least one variable of the second role is larger in number than the at least one variable of the first role, the at least one variable being permitted to be published to the external device.

3. The support device according to claim 2, wherein
the at least one variable that is published to the external device when the second role is specified includes all of the at least one variable that is permitted to be published to the external device when the first role is specified, and
the at least one variable that is permitted to be published to the external device when the first role is specified does not include all of the at least one variable that is permitted to be published to the external device when the second role is specified.

4. The support device according to any one of claims 1 to 3, wherein
the user program includes first identification information for identifying an instance generated during execution of a function block included in the user program,
the function block has second identification information that is unique,
the at least one variable used during the execution is determined in advance in the function block, and
the user interface is configured to allow the user to specify at least one of the first identification information and the second identification information to conduct the publication setting.

5. The support device according to claim 4, wherein the user interface is configured to allow the user to conduct the publication setting of each of the at least one variable stored in the instance that corresponds to the first identification information specified by the user.

6. The support device according to claim 4, wherein the publication setting information includes information for which the publication setting conducted using the first identification information is prioritized over the publication setting conducted using the second identification information.

7. The support device according to claim 4, wherein the publication setting information includes information for which the publication setting conducted using the second identification information is prioritized over the publication setting conducted using the first identification information.

8. The support device according to claim 4, wherein the user interface is configured to allow the user to select which one of the publication setting conducted using the first identification information and the publication setting conducted using the second identification information is prioritized.

9. A control method for a support device that supports a control device configured to control a control target according to a user program, the control method comprising:
providing a user interface for allowing a user to conduct a publication setting of at least one variable to an external device, the at least one variable being generated during execution of the user program; and
generating publication setting information based on the publication setting conducted by the user using the user interface, wherein
the control device is configured to manage publication of the at least one variable to the external device based on the publication setting information, the at least one variable being generated during execution of the user program,
the publication setting information includes at least one of:
information for setting whether or not to permit the external device to read the at least one variable according to at least one role; and
information for setting whether or not to permit the external device to execute the at least one variable according to the at least one role, and
the user interface is configured to allow the user to specify one of the at least one role to conduct the publication setting.

10. A support program for supporting a control device configured to control a control target according to a user program, the support program causing a computer to perform:
providing a user interface for allowing a user to conduct a publication setting of at least one variable to an external device, the at least one variable being generated during execution of the user program; and
generating publication setting information based on the publication setting conducted by the user using the user interface, wherein
the control device is configured to manage publication of the at least one variable to the external device based on the publication setting information, the at least one variable being generated during execution of the user program,
the publication setting information includes at least one of:
information for setting whether or not to permit the external device to read the at least one variable according to at least one role; and
information for setting whether or not to permit the external device to execute the at least one variable according to the at least one role, and
the user interface is configured to allow the user to specify one of the at least one role to conduct the publication setting.
